# EUROPÄISCHE PATENTANMELDUNG

(11) **EP 2 728 021 A1**
(43) Veröffentlichungstag der Anmeldung: **07.05.2014**
(21) Anmeldenummer: 12190791.9
(22) Anmeldetag: 31.10.2012
(51) Int. Cl.: C21D 7/04, G01N 29/07, G01N 29/04, B23P 9/00, B24C 1/10

(54) **Verfahren und Vorrichtung zur Oberflächenbehandlung eines Bauteils**

(71) Anmelder: MTU Aero Engines AG, 80995 München (DE)
(72) Erfinder: Bamberg, Joachim, 85221 Dachau (DE); Hessert, Roland, 82211 Herrsching (DE)

(57) **Zusammenfassung**

Die Erfindung betrifft ein Verfahren, bei welchem eine Oberfläche (14) eines Bauteils (16), insbesondere eines Bauteils für ein Flugzeugtriebwerk, zumindest bereichsweise oberflächenbehandelt wird, wobei während der Oberflächenbehandlung mittels eines Ultraschallsenders (22) wenigstens eine Ultraschallwelle (24) zumindest im behandelten Bereich (12) der Oberfläche (14) des Bauteils (16) erzeugt wird, mittels eines vom Ultraschallsender (22) beabstandeten Ultraschalldetektors (26) eine resultierende Ultraschallwelle (24) an der Oberfläche (14) des Bauteils (16) detektiert wird und mittels einer Ermittlungseinrichtung (30) eine Randschichtcharakteristik des Bauteils (16) anhand eines Unterschieds zwischen der wenigstens einen erzeugten Ultraschallwelle (24) und der resultierenden Ultraschallwelle (24) ermittelt wird. Die Erfindung betrifft weiterhin eine Vorrichtung (10) mit einer Oberflächenbehandlungseinrichtung (18) zur zumindest bereichsweisen Oberflächenbehandlung einer Oberfläche (14) eines Bauteils (16), einem Ultraschallsender (22), einem Ultraschalldetektor (26) und einer Ermittlungseinrichtung (30) umfasst, mittels welcher eine Randschichtcharakteristik des Bauteils (16) anhand eines Unterschieds zwischen einer in das Bauteil (16) eingekoppelten Ultraschallwelle (24) und einer resultierenden Ultraschallwelle (24) ermittelbar ist.

## Beschreibung

Die Erfindung betrifft ein Verfahren, bei welchem eine Oberfläche eines Bauteils, insbesondere eines Bauteils für ein Flugzeugtriebwerk, zumindest bereichsweise oberflächenbehandelt wird. Die Erfindung betrifft weiterhin eine Vorrichtung mit einer Oberflächenbehandlungseinrichtung zur zumindest bereichsweisen Oberflächenbehandlung einer Oberfläche eines Bauteils, insbesondere eines Bauteils für ein Flugzeugtriebwerk.

Verfahren und Vorrichtungen zum Oberflächenbehandeln von Bauteilen sind aus dem Stand der Technik in verschiedenen Ausgestaltungen bekannt. Oberflächenbehandlungsverfahren können grundsätzlich spanend, läppend, abtragend, beschichtend oder reinigend durchgeführt werden. Beispielsweise offenbart die DE 10 2007 009 470 A1 ein Verfahren und eine Vorrichtung zum Oberflächenstrahlen eines Bauteils für eine Gasturbine eines Flugzeugtriebwerks. Dabei wird zumindest ein Bereich der Oberfläche des Bauteils mit Strahlgut wie beispielsweise Stahlkugeln beaufschlagt, um eine Oberflächenverfestigung zu erzielen. Dies ermöglicht eine Erhöhung der Lebensdauer insbesondere von hochbelasteten Bauteilen für Flugzeugtriebwerke.

Die Qualität der Oberflächenbehandlung, das heißt die eingebrachten Eigenspannungs- und Verfestigungszustände der behandelten Bauteiloberfläche, kann anschließend beispielsweise durch Röntgenbeugung mit elektrochemischem Abtrag oder durch die sogenannte Bohrlochmethode ermittelt werden, um eine Lebensdauerprognose des Bauteils zu erstellen. Hierbei handelt es sich jedoch um zerstörende Prüfverfahren. Weiterhin kann eine indirekte Kontrolle mit Hilfe von mitverfestigten Referenzproben (Almenplättchen) an einzelnen, gut zugänglichen Bauteilbereichen vorgenommen werden. Dies ermöglicht aber nur sehr begrenzte Aussagen über die Qualität des gesamten verfestigten Bauteilbereichs. Alternativ ist es bekannt, die Qualität der Oberflächenbehandlung durch Synchrotronstrahlung oder durch Neutronenbeugung zu beurteilen. Derartige Messverfahren erfordern jedoch einen enormen apparativen Aufwand sowie die Verwendung radioaktiver Strahlquellen und ermöglichen zudem nur die Vermessung einfachster Bauteilgeometrien mit geringer Ortsauflösung. Darüber hinaus müssen alle bekannten Prüfverfahren im Anschluss an die Oberflächenbehandlung vorgenommen werden, so dass keine unmittelbare Kontrolle der Qualität der behandelten Oberfläche möglich ist. Alternativ muss die Oberflächenbehandlung für eine oder mehrere Zwischenprüfungen der Bauteilqualität unterbrochen und nach der Zwischenprüfung fortgesetzt werden. Dies führt zu einem hohen Zeit- und Kostenaufwand.

Aufgabe der vorliegenden Erfindung ist es, eine zerstörungsfreie Kontrolle der Randschichtqualität eines Bauteils während der Oberflächenbehandlung zu ermöglichen.

Die Aufgabe wird erfindungsgemäß durch ein Verfahren mit den Merkmalen des Anspruchs 1 sowie durch eine Vorrichtung mit den Merkmalen des Anspruchs 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Bei einem erfindungsgemäßen Verfahren, bei welchem eine Oberfläche eines Bauteils, insbesondere eines Bauteils für ein Flugzeugtriebwerk, zumindest bereichsweise oberflächenbehandelt wird, ist es vorgesehen, dass während der Oberflächenbehandlung mittels eines Ultraschallsenders wenigstens eine Ultraschallwelle zumindest im behandelten Bereich der Oberfläche des Bauteils erzeugt wird. Mittels eines vom Ultraschallsender beabstandeten Ultraschalldetektors wird daraufhin eine resultierende Ultraschallwelle an der Oberfläche des Bauteils detektiert. Anschließend wird mittels einer Ermittlungseinrichtung eine Randschichtcharakteristik des Bauteils anhand eines Unterschieds zwischen der wenigstens einen erzeugten Ultraschallwelle und der erfassten resultierenden Ultraschallwelle ermittelt. Mit anderen Worten ist es erfindungsgemäß vorgesehen, dass mit Hilfe des Ultraschallsenders eine Ultraschall-Oberflächenwelle, die auch als Rayleigh-Welle bezeichnet wird, zumindest in dem Bereich des Bauteils erzeugt wird, der gerade lokal oberflächen- bzw. randschichtbehandelt wird. Die direkte Online-Ermittlung der resultierenden Schallgeschwindigkeit der wenigstens einen Ultraschallwelle erfolgt durch den Ultraschalldetektor. Die Schallgeschwindigkeit der Ultraschallwelle hängt im Wesentlichen von den elastischen Eigenschaften des Bauteilmaterials ab. Änderungen der Randschichteigenschaften des Bauteils führen daher zu entsprechenden Änderungen der Schallgeschwindigkeit und werden mit Hilfe der Ermittlungseinrichtung ausgewertet, wodurch Informationen über die Qualität und Beschaffenheit der bearbeiteten Oberfläche erhalten werden. Das erfindungsgemäße Verfahren erlaubt somit im Unterschied zum Stand der Technik eine zerstörungsfreie und unmittelbare "online"-Messung und Kontrolle der Qualität und des Fortschritts der Oberflächenbehandlung am Bauteil, ohne dass die Oberflächenbehandlung unterbrochen werden muss. Dadurch kann die Oberflächenbehandlung besonders schnell, reproduzierbar und quantitativ durchgeführt werden, wodurch entsprechende Arbeitszeit- und Kosteneinsparungen realisierbar sind. Darüber hinaus können auch Bauteile mit schwer zugänglichen Oberflächenbereichen und komplexen Geometrien problemlos überwacht werden.

In einer vorteilhaften Ausgestaltung der Erfindung ist vorgesehen, dass wenigstens ein Verfahrensparameter der Oberflächenbehandlung in Abhängigkeit der ermittelten Randschichtcharakteristik gesteuert und/oder geregelt wird. Hierdurch wird eine besonders hohe Bauteilgüte erzielt, da die Verfahrensparameter in Abhängigkeit des individuellen Zustands des jeweils behandelten Bauteils optimal eingestellt werden können. Beispielsweise hängt die übertragene Energie beim Verfestigungsstrahlen im Wesentlichen ab von Masse, Auftreffgeschwindigkeit, Auftreffwinkel und Härte der Strahlmittelkörner, von der Anzahl der Strahlmitteltreffer, und der Oberflächenbeschaffenheit des Strahlgutes. Die Oberflächenbehandlung kann daher über Verfahrensparameter wie etwa Material und Geometrie des Strahlguts, Partikelgeschwindigkeit, Verfahrgeschwindigkeit der Oberflächenbehandlungseinrichtung über die Oberfläche und dergleichen gezielt beeinflusst werden.

Weitere Vorteile ergeben sich, wenn mittels des Ultraschallsenders wenigstens eine Ultraschallwelle mit einer Frequenz zwischen 5 MHz und 10 MHz erzeugt wird. Unter einer Frequenz zwischen 5 MHz und 10 MHz sind insbesondere Frequenzen von 5,0 MHz, 5,5 MHz, 6,0 MHz, 6,5 MHz, 7,0 MHz, 7,5 MHz, 8,0 MHz, 8,5 MHz, 9,0 MHz, 9,5 MHz oder 10,0 MHz sowie entsprechende Zwischenfrequenzen zu verstehen. Hierdurch können Bauteile aus unterschiedlichsten Materialien, beispielsweise aus Titan- oder Nickelbasis-Werkstoffen, optimal überwacht werden, da die Frequenz der Ultraschallwelle optimal an die elastischen Eigenschaften des betreffenden Materials angepasst werden kann.

In einer weiteren vorteilhaften Ausgestaltung der Erfindung ist vorgesehen, dass zum Ermitteln der Randschichtcharakteristik ein Dispersionsanalyseverfahren verwendet wird und/oder dass mittels der Ermittlungseinrichtung ein Tiefenprofil des Bauteils ermittelt wird. Wenn eine Ultraschallwelle nicht-dispersiv ist, ist ihre Schallgeschwindigkeit unabhängig von ihrer Frequenz. Mit anderen Worten ändert sich die Geschwindigkeit einer Rayleigh-Welle nicht, wenn ihre Frequenz geändert wird. Da Bauteile, insbesondere Bauteile für Flugzeugtriebwerke, jedoch in der Regel aus dispersiven Materialien bestehen, ist die Schallgeschwindigkeit der an der Oberfläche des Bauteils erzeugten Rayleigh-Welle von ihrer Frequenz abhängig. Hierdurch ändert sich die räumliche und zeitliche Verteilung einer Fortpflanzungsstörung ständig. Jede Frequenzkomponente pflanzt sich jeweils mit ihrer eigenen Phasengeschwindigkeit fort, während die Energie der Störung sich mit der Gruppengeschwindigkeit fortpflanzt. Mit Hilfe einer Dispersionsanalyse kann daher vorteilhaft eine besonders exakte, ortsaufgelöste Randschichtcharakteristik des Bauteils ermittelt werden. Wenn die Wellenlänge einer Ultraschallwelle erhöht wird, erhöht sich auch die Eindringtiefe der Rayleigh-Welle in das Bauteil. In erster Näherung entspricht die Eindringtiefe einer Rayleigh-Welle im Wesentlichen ihrer Wellenlänge, variiert jedoch in Abhängigkeit der Materialeigenschaften des Bauteils. Hierdurch kann mit Hilfe des erfindungsgemäßen Verfahrens vorteilhaft ein Tiefenprofil des Bauteils ermittelt werden, wodurch besonders präzise Aussagen über die Qualität der Oberflächenbehandlung möglich sind.

In einer weiteren vorteilhaften Ausgestaltung der Erfindung ist vorgesehen, dass mittels des Ultraschallsenders mehrere Ultraschallwellen gleicher Frequenz und/oder mehrere Ultraschallwellen unterschiedlicher Frequenzen und/oder wenigstens eine breitbandige Ultraschallwelle erzeugt wird bzw. werden. Dies stellt eine weitere Möglichkeit dar, um in Abhängigkeit des Materials und der Geometrie des Bauteils sowie des verwendeten Oberflächenbehandlungsverfahrens besonders präzise Aussagen über die Qualität und Beschaffenheit der Randschicht des Bauteils treffen zu können.

Weiterhin hat es sich als vorteilhaft gezeigt, wenn mittels des Ultraschallsenders gepulste Ultraschallwellen, insbesondere mit einer Pulsfrequenz zwischen 500 s⁻¹ und 1500 s⁻¹ erzeugt werden. Hierdurch ist es möglich, die Beschaffenheit der Randschicht des Bauteils auf Basis der Schallreflektion zu ermitteln. Beispielsweise können mehrere kurze Ultraschall-Impulse pro Sekunde in die Oberfläche des Bauteils eingestrahlt und über Zeitfenster die Geschwindigkeit der reflektierten Ultraschallwellen bestimmt werden.

Weitere Vorteile ergeben sich, wenn als Oberflächenbehandlung ein Verfestigungsverfahren durchgeführt wird. Hierdurch kann insbesondere für ein hochbelastetes Bauteil wie beispielsweise ein Bauteil für ein Flugzeugtriebwerk eine erhebliche Lebensdauerverlängerung erzielt werden. Die online bzw. in-situ Ermittlung der Randschichtcharakteristik mit Hilfe von Rayleigh-Wellen beeinträchtigt das Verfestigungsverfahren vorteilhafter Weise nicht.

Dabei hat es sich als vorteilhaft gezeigt, wenn als Verfestigungsverfahren Kugelstrahlen und/oder Ultraschallkugelstrahlen und/oder Festwalzen und/oder Laserschock-Strahlen (Laser shock peening) verwendet wird. Hierdurch können die durch das erfindungsgemäße Verfahren erzielbaren Vorteile für unterschiedliche Bauteile und unterschiedliche Oberflächenbearbeitungsarten realisiert werden.

Indem ein Bauteil aus einem polykristallinen und/oder einkristallinen und/oder hochtemperaturfesten Werkstoff verwendet wird, wird eine besonders hohe Lebensdauer des Bauteils auch unter späteren extremen Betriebsbedingungen, wie sie beispielsweise in Flugzeugtriebwerken herrschen, sichergestellt.

Besondere Arbeitszeit- und Kostenvorteile lassen sich in weiterer Ausgestaltung der Erfmdung erzielen, wenn als Bauteil eine Verdichterscheibe und/oder eine Turbinenscheibe und/oder eine Schaufel und/oder eine Welle einer Gasturbine, insbesondere eines Flugzeugtriebwerks verwendet wird.

Ein weiterer Aspekt der Erfindung betrifft eine Vorrichtung mit einer Oberflächenbehandlungseinrichtung zur zumindest bereichsweisen Oberflächenbehandlung einer Oberfläche eines Bauteils, insbesondere eines Bauteils für ein Flugzeugtriebwerk, wobei erfindungsgemäß vorgesehen ist, dass diese zusätzlich wenigstens einen Ultraschallsender umfasst, mittels welchem während der Oberflächenbehandlung zumindest im zu bearbeitenden Bereich der Oberfläche des Bauteils wenigstens eine Ultraschallwelle erzeugbar ist. Weiterhin umfasst die erfindungsgemäße Vorrichtung wenigstens einen vom Ultraschallsender beabstandeten Ultraschalldetektor, mittels welchem eine resultierende Ultraschallwelle an der Oberfläche des Bauteils detektierbar ist, sowie wenigstens eine Ermittlungseinrichtung, mittels welcher eine Randschichtcharakteristik des Bauteils anhand eines Unterschieds zwischen der wenigstens einen erzeugten Ultraschallwelle und der resultierenden Ultraschallwelle ermittelbar ist. Die erfindungsgemäße Vorrichtung erlaubt es, mit Hilfe des Ultraschallsenders eine Ultraschall-Oberflächenwelle, die auch als Rayleigh-Welle bezeichnet wird, zumindest in dem Bereich des Bauteils zu erzeugen, der gerade lokal mittels der Oberflächenbehandlungseinrichtung oberflächenbehandelt wird. Die direkte Ermittlung der resultierenden Schallgeschwindigkeit der wenigstens einen Ultraschallwelle erfolgt durch den Ultraschalldetektor. Die Schallgeschwindigkeit der Ultraschallwelle hängt im Wesentlichen von den elastischen Eigenschaften des Bauteilmaterials ab. Änderungen der Oberflächen- und Randschichteigenschaften des Bauteils führen daher zu entsprechenden Änderungen der Schallgeschwindigkeit und werden mit Hilfe der Ermittlungseinrichtung ausgewertet, wodurch Informationen über die Qualität und Beschaffenheit der bearbeiteten Oberfläche bzw. Randschichten erhalten werden. Die erfindungsgemäße Vorrichtung erlaubt somit im Unterschied zum Stand der Technik eine zerstörungsfreie und unmittelbare "online"-Messung und Kontrolle der Qualität und des Fortschritts der Oberflächenbehandlung am Bauteil, ohne dass die Oberflächenbehandlung durch die Oberflächenbehandlungseinrichtung unterbrochen werden muss. Dadurch kann die Oberflächenbehandlung besonders schnell, reproduzierbar und quantitativ durchgeführt werden, wodurch entsprechende Arbeitszeit- und Kosteneinsparungen realisierbar sind. Darüber hinaus können auch Bauteile mit schwer zugänglichen Oberflächenbereichen und komplexen Geometrien problemlos überwacht werden. Vorzugsweise ist die erfindungsgemäße Vorrichtung zur Durchführung eines Verfahrens nach einem der vorhergehenden Ausführungsbeispiele ausgebildet. Die sich hieraus ergebenden Vorteile sind den vorhergehenden Beschreibungen des erfindungsgemäßen Verfahrens zu entnehmen.

Dabei hat es sich als vorteilhaft gezeigt, wenn die Ermittlungseinrichtung zum Datenaustausch mit dem Ultraschallsender und/oder mit dem Ultraschalldetektor gekoppelt ist. Hierdurch kann die Ermittlungseinrichtung die Welleneigenschaften der erzeugten und/oder erfassten Ultraschallwelle(n) besonders einfach ermitteln und zur Auswertung der Oberflächenbeschaffenheit des Bauteils im bearbeiteten Bereich heranziehen.

Weitere Vorteile ergeben sich, indem die Ermittlungseinrichtung zum Datenaustausch mit einem Steuer- und/oder Regelsystem der Oberflächenbehandlungseinrichtung gekoppelt ist, wobei das Steuer- und/oder Regelsystem ausgelegt ist, wenigstens einen Verfahrensparameter der Oberflächenbehandlungseinrichtung in Abhängigkeit der ermittelten Randschichtcharakteristik zu steuern und/oder zu regeln. Dies ermöglicht in Abhängigkeit der ermittelten Oberflächenbeschaffenheit einen unmittelbaren Eingriff in die Oberflächenbehandlung des Bauteils, wodurch die Oberflächenbehandlung des Bauteils besonders schnell, präzise und reproduzierbar durchgeführt werden kann. Darüber hinaus wird hierdurch zuverlässig verhindert, dass das Bauteil fehlerhaft oberflächenbehandelt wird, wodurch eine möglicherweise irreparable Beschädigung des Bauteils oder etwaige Nachbearbeitungsschritte zuverlässig vermieden werden.

In einer weiteren vorteilhaften Ausgestaltung der Erfindung ist ein Abschirmelement vorgesehen, mittels welchem der Ultraschallsender und/oder der Ultraschalldetektor zumindest bereichsweise überdeckt sind, wobei das Abschirmelement vorzugsweise beabstandet von der Oberfläche des Bauteils angeordnet ist. Hierdurch können der Ultraschallsender und/oder der Ultraschalldetektor vor Beschädigung geschützt werden. Dies ist insbesondere von Vorteil, wenn die Oberflächenbehandlungseinrichtung als Kugelstrahleinrichtung oder dergleichen ausgebildet ist. Indem das Abschirmelement beabstandet von der Oberfläche des Bauteils angeordnet ist, kann zudem vorteilhaft sichergestellt werden, dass das Abschirmelement die Ausbreitung der Rayleigh-Wellen nicht beeinträchtigt.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische seitliche Schnittansicht einer erfindungsgemäße Vorrichtung zur zumindest bereichsweisen Oberflächenbehandlung einer Oberfläche eines Bauteils;
- Fig. 2: eine schematische seitliche Schnittansicht einer alternativen Ausführungsform der Vorrichtung; und
- Fig. 3: eine schematische seitliche Schnittansicht eines schwer zugänglichen Bauteilbereichs.

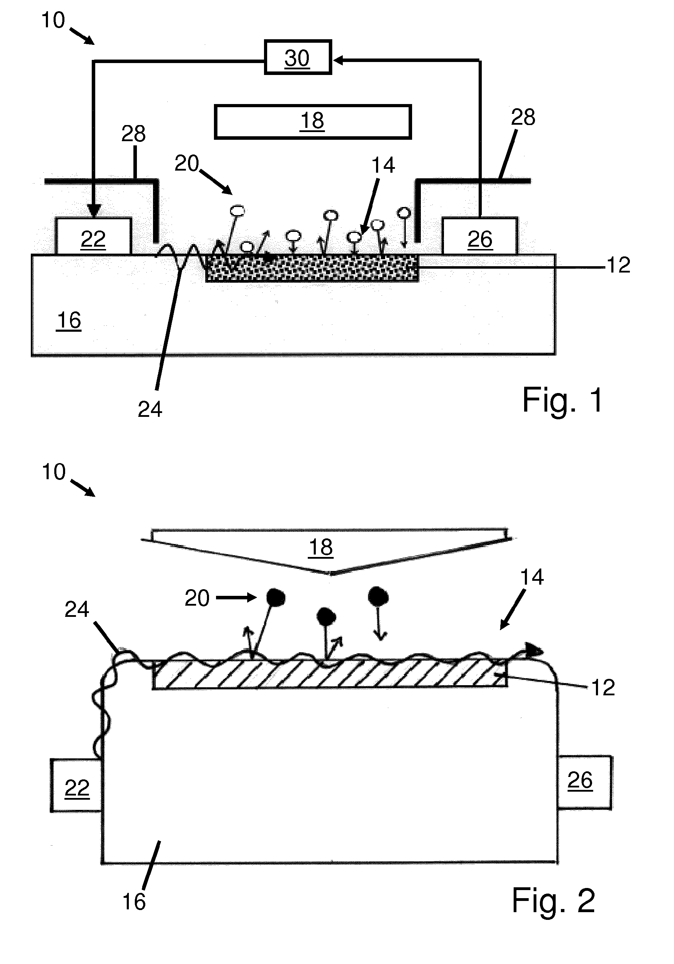

Fig. 1 zeigt eine schematische seitliche Schnittansicht einer erfindungsgemäße Vorrichtung 10 zur Oberflächenbehandlung eines Randschichtbereichs 12 einer Oberfläche 14 eines Bauteils 16, welches vorliegend als Verdichterscheibe für ein Flugzeugtriebwerk ausgebildet ist und aus einem hochtemperaturfesten Material wie etwa Inconel 718 oder Titan 64 besteht. Zur Oberflächenbehandlung umfasst die Vorrichtung 10 eine Oberflächenbehandlungseinrichtung 18, welche vorliegend als Kugelstrahleinrichtung ausgebildet ist und die Oberfläche 14 im zu verfestigenden Randschichtbereich 12 in an sich bekannter Weise mit Strahlgut 20 beaufschlagt. Die Randschichtverfestigung des Bereichs 12 erfolgt beispielsweise mit einer Strahlintensität entsprechend 0,1 bis 0,25 mm Almen und mit einer Tiefe zwischen 100 µm und 300 µm.

Zur Kontrolle des Oberflächenbehandlungsverfahrens und der Eigenschaften des verfestigten Randschichtbereichs 12 umfasst die Vorrichtung 10 einen Ultraschallsender 22, mittels welchem während der Oberflächenbehandlung zumindest im zu bearbeitenden Randschichtbereich 12 der Oberfläche 14 des Bauteils 16 Ultraschallwellen 24 mit Frequenzen zwischen 5 MHz und 10 MHz erzeugt werden. Die Ultraschallwellen 24 können kontinuierlich oder als Schallpulse mit beispielsweise 1000 Pulsen pro Sekunde erzeugt werden. Der Ultraschallsender 22 ist im gezeigten Ausführungsbeispiel unmittelbar an der Oberfläche 14 des Bauteils 16 angeordnet. Die Ultraschallwellen 24, die auch als Rayleigh-Wellen bezeichnet werden, wandern als Oberflächenwellen zu einem vom Ultraschallsender 22 beabstandeten Ultraschalldetektor 26 der Vorrichtung 10, mittels welchem die aus der Wechselwirkung mit dem Bauteil 16 resultierende Ultraschallwelle 24 detektiert wird. Sowohl der Ultraschallsender 22 als auch der Ultraschalldetektor 26 sind bereichsweise mittels jeweiliger Abschirmelemente 28 überdeckt, um sie gegen das Strahlgut 20 abzuschirmen und vor Beschädigung zu schützen. Man erkennt, dass die Abschirmelemente 28 beabstandet von der Oberfläche 14 des Bauteils 16 angeordnet sind, um die Propagierung der Ultraschallwelle 24 nicht zu beeinflussen.

Weiterhin umfasst die Vorrichtung 10 eine zum Datenaustausch mit dem Ultraschallsender 22 und dem Ultraschalldetektor 26 gekoppelte Ermittlungseinrichtung 30, mittels welcher eine Randschichtcharakteristik des Bauteils 16 im bearbeiteten Randschichtbereich 12 anhand eines Unterschieds zwischen der erzeugten Ultraschallwelle(n) 24 und der detektierten Ultraschallwelle(n) 24 ermittelt wird, so dass eine Online-Kontrolle der Oberflächenverfestigung gegeben ist. Die Ermittlungseinrichtung 30 kann die Randschichtcharakteristik beispielsweise durch Dispersions-Analyse ermitteln. Durch Variation der Frequenzen der Ultraschallwellen 24 ist es zudem möglich, ein Tiefenprofil des Bauteils 16 zu erstellen. Weiterhin kann vorgesehen sein, dass die Ermittlungseinrichtung 30 zum Datenaustausch mit einem Steuer- und/oder Regelsystem (nicht gezeigt) der Oberflächenbehandlungseinrichtung 18 gekoppelt ist, um Verfahrensparameter der Oberflächenbehandlungseinrichtung 18 in Abhängigkeit der ermittelten Randschichtcharakteristik des Bauteils 16 zu steuern und/oder zu regeln.

Fig. 2 zeigt eine schematische seitliche Schnittansicht einer alternativen Ausführungsform der Vorrichtung 10, wobei die Ermittlungseinrichtung 30 aus Gründen der Übersichtlichkeit nicht dargestellt ist. Das zu behandelnde Bauteil 16 weist im gezeigten Ausführungsbeispiel einen zu verfestigenden Bereich 12 auf, der schwer zugänglich ist. Daher sind der Ultraschallsender 22 und der Ultraschalldetektor 26 im Unterschied zum vorhergehenden Ausführungsbeispiel nicht auf der Langseite des Bauteils 16 bzw. auf der Seite des Bauteils 16, auf welcher sich der zu behandelnde Bereich 12 befindet, sondern an einander gegenüberliegenden und besser zugänglichen Schmalseiten des Bauteils 16 angeordnet. Die erzeugten Ultraschallwellen 24 pflanzen sich somit wie in Fig. 2 angedeutet entlang der Oberfläche 14 des Bauteils 16 "um die Ecke" fort.

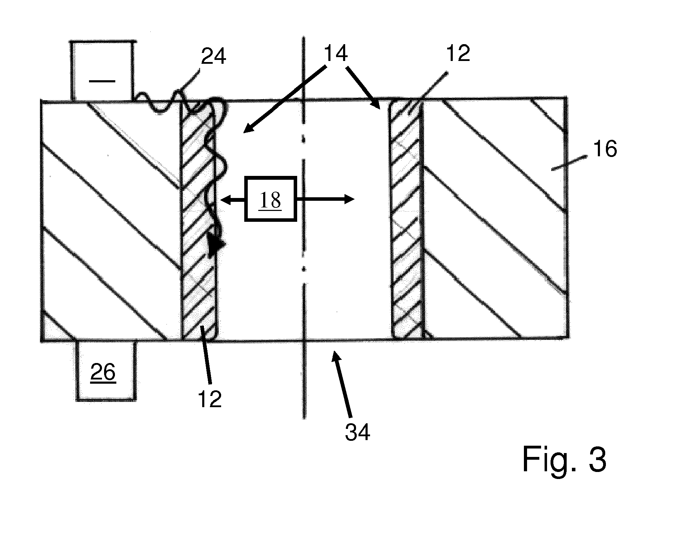

Fig. 3 zeigt eine schematische seitliche Schnittansicht eines schwer zugänglichen Bauteilbereichs, beispielsweise einer Bohrung, eines Bauteils 16. Man erkennt, dass das Bauteil 16 geometrisch vergleichsweise komplex ausgebildet ist und einen schwer zugänglichen Kanal 34 aufweist, innerhalb welchem die zu verfestigenden Bereiche 12 der Oberfläche 14 des Bauteils 16 liegen. Auch in diesem Fall sind der Ultraschallsender 22 und der Ultraschalldetektor 26 nicht an derselben Seite des Bauteils 16 wie die zu behandelnden Bereiche 12, das heißt nicht innerhalb des Kanals 34 angeordnet, so dass die erzeugten Ultraschallwellen 24 auch in diesem Fall dem nicht-linearen Verlauf der Oberfläche 14 folgen.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren, bei welchem eine Oberfläche (14) eines Bauteils (16), insbesondere eines Bauteils für ein Flugzeugtriebwerk, zumindest bereichsweise oberflächenbehandelt wird, **dadurch gekennzeichnet, dass** während der Oberflächenbehandlung:
- mittels eines Ultraschallsenders (22) wenigstens eine Ultraschallwelle (24) zumindest im behandelten Randschichtbereich (12) der Oberfläche (14) des Bauteils (16) erzeugt wird;
- mittels eines vom Ultraschallsender (22) beabstandeten Ultraschalldetektors (26) eine resultierende Ultraschallwelle (24) an der Oberfläche (14) des Bauteils (16) detektiert wird; und
- mittels einer Ermittlungseinrichtung (30) eine Randschichtcharakteristik des Bauteils (16) anhand eines Unterschieds zwischen der wenigstens einen erzeugten Ultraschallwelle (24) und der resultierenden Ultraschallwelle (24) ermittelt wird.

2. Verfahren nach Anspruch 2, **dadurch gekennzeichnet, dass** wenigstens ein Verfahrensparameter der Oberflächenbehandlung in Abhängigkeit der ermittelten Randschichtcharakteristik gesteuert und/oder geregelt wird.

3. Verfahren nach Anspruch 1 oder 2, **dadurch gekennzeichnet, dass** mittels des Ultraschallsenders (22) wenigstens eine Ultraschallwelle (24) mit einer Frequenz zwischen 5 MHz und 10 MHz erzeugt wird.

4. Verfahren nach einem der Ansprüche 1 bis 3, **dadurch gekennzeichnet, dass** zum Ermitteln der Randschichtcharakteristik ein Dispersionsanalyseverfahren verwendet wird und/oder dass mittels der Ermittlungseinrichtung (30) ein Tiefenprofil des Bauteils (16) ermittelt wird.

5. Verfahren nach einem der Ansprüche 1 bis 4, **dadurch gekennzeichnet, dass** mittels des Ultraschallsenders (22) mehrere Ultraschallwellen (24) gleicher Frequenz und/oder mehrere Ultraschallwellen (24) unterschiedlicher Frequenzen und/oder wenigstens eine breitbandige Ultraschallwelle (24) erzeugt wird bzw. werden.

6. Verfahren nach Anspruch 5, **dadurch gekennzeichnet, dass** mittels des Ultraschallsenders (22) gepulste Ultraschallwellen (24), insbesondere mit einer Pulsfrequenz zwischen 500 s⁻¹ und 1500 s⁻¹ erzeugt werden.

7. Verfahren nach einem der Ansprüche 1 bis 6, **dadurch gekennzeichnet, dass** als Oberflächenbehandlung ein Verfestigungsverfahren durchgeführt wird.

8. Verfahren nach Anspruch 7, **dadurch gekennzeichnet, dass** als Verfestigungsverfahren Kugelstrahlen und/oder Ultraschallkugelstrahlen und/oder Festwalzen und/oder Laserschock-Strahlen (Laser shock peening) verwendet wird.

9. Verfahren nach einem der Ansprüche 1 bis 8, **dadurch gekennzeichnet, dass** ein Bauteil (16) aus einem polykristallinen und/oder einkristallinen und/oder hochtemperaturfesten Werkstoff verwendet wird.

10. Verfahren nach einem der Ansprüche 1 bis 9, **dadurch gekennzeichnet, dass** als Bauteil (16) eine Verdichterscheibe und/oder eine Turbinenscheibe und/oder eine Schaufel und/oder eine Welle einer Gasturbine, insbesondere eines Flugzeugtriebwerks verwendet wird.

11. Vorrichtung (10) mit einer Oberflächenbehandlungseinrichtung (18) zur zumindest bereichsweisen Oberflächenbehandlung einer Oberfläche (14) eines Bauteils (16), insbesondere eines Bauteils (16) für ein Flugzeugtriebwerk, **dadurch gekennzeichnet, dass** diese zusätzlich:
- wenigstens einen Ultraschallsender (22) umfasst, mittels welchem während der Oberflächenbehandlung zumindest im zu bearbeitenden Bereich (12) der Oberfläche (14) des Bauteils (16) wenigstens eine Ultraschallwelle (24) erzeugbar ist;
- wenigstens einen vom Ultraschallsender (22) beabstandeten Ultraschalldetektor (26) umfasst, mittels welchem eine resultierende Ultraschallwelle (24) an der Oberfläche (14) des Bauteils (16) detektierbar ist; und
- wenigstens eine Ermittlungseinrichtung (30) umfasst, mittels welcher eine Randschichtcharakteristik des Bauteils (16) anhand eines Unterschieds zwischen der wenigstens einen erzeugten Ultraschallwelle (24) und der resultierenden Ultraschallwelle (24) ermittelbar ist.

12. Vorrichtung nach Anspruch 11, **dadurch gekennzeichnet, dass** die Ermittlungseinrichtung (30) zum Datenaustausch mit dem Ultraschallsender (22) und/oder mit dem Ultraschalldetektor (26) gekoppelt ist.

13. Vorrichtung nach Anspruch 11 oder 12, **dadurch gekennzeichnet, dass** die Ermittlungseinrichtung (30) zum Datenaustausch mit einem Steuer- und/oder Regelsystem der Oberflächenbehandlungseinrichtung (18) gekoppelt ist, wobei das Steuer- und/oder Regelsystem ausgelegt ist, wenigstens einen Verfahrensparameter der Oberflächenbehandlungseinrichtung (18) in Abhängigkeit der ermittelten Randschichtcharakteristik zu steuern und/oder zu regeln.

14. Vorrichtung nach einem der Ansprüche 11 bis 13, **dadurch gekennzeichnet, dass** ein Abschirmelement (28) vorgesehen ist, mittels welchem der Ultraschallsender (22) und/oder der Ultraschalldetektor (26) zumindest bereichsweise überdeckt sind, wobei das Abschirmelement (28) vorzugsweise beabstandet von der Oberfläche (14) des Bauteils (16) angeordnet ist.
